# EUROPÄISCHE PATENTSCHRIFT

(11) **EP 0 628 396 B1**
(45) Veröffentlichungstag und Bekanntmachung des Hinweises auf die Patenterteilung: **07.02.1996**
(21) Anmeldenummer: 93109358.7
(22) Anmeldetag: 11.06.1993
(51) Int. Cl.: B29C 45/37

(54) **Markiereinsatz für ein Spritzgiesswerkzeug**
Marking insert for an injection mould
Insertion de marquage pour un moule d'injection

(43) Veröffentlichungstag der Anmeldung: 14.12.1994
(73) Patentinhaber: Navarra, Alberto, E-08960 Sant Just Desvern, Barcelona (ES)
(72) Erfinder: Navarra, Alberto, E-08960 Sant Just Desvern, Barcelona (ES)
(74) Vertreter: Hassler, Werner, Dr.

(56) Entgegenhaltungen:
- DE-C- 3 931 200
- DE-U- 8 526 599
- DE-U- 8 901 523
- US-A- 4 384 702

## Beschreibung

Die Erfindung betrifft einen Markiereinsatz für ein Spritzgießwerkzeug mit einer eine zylindrische Aufnahme aufweisenden Hülse und mit einem in der Aufnahme drehbar gehaltenen und in axialer Richtung vorgespannten Markierkörper, wobei die Aufnahme einen Innenbund (3) für den Kopf (17) des Markierkörpers (16) und einen daran anschließenden Durchgang (4) für den Schaft (18) aufweist.

Die DE 39 31 200 C1 beschreibt einen Markiereinsatz der gattungsgemäßen Art. An den Durchgang schließt ein Axialschlitz an, durch den ein Verriegelungsvorsprung des Schaftes geschoben werden kann. Der Verriegelungsvorsprung greift nach dem Einschieben und Verdrehen hinter den Innenbund, so daß der Markierkörper gegen ein Herausziehen gesichert ist. Die Stellung des Schlitzes muß besonders sichtbar gemacht werden. Der Markiereinsatz kann auf die dem Radialschlitz entsprechende Umfangsstellung nicht eingestellt werden. Damit ist die Handhabung dieses Markiereinsatzes umständlich.

Aufgabe der Erfindung ist die Bereitstellung eines Markiereinsatzes, der allein durch eine drehende Schraubbewegung von der Formseite eingeschraubt und gelöst werden können.

Diese Aufgabe wird nach der Erfindung dadurch gelöst, daß eine fußseitige Seckskantkammer (7) für eine Sechskantmutter (12) vorgesehen ist, daß der Schaft (18) des Markierkörpers (16) ein Fußgewinde (19) mit größerem Durchmesser als der Schaft (18) trägt und daß eine Druckfeder (11) zwischen der dem Durchgang (4) gegenüberliegenden Stirnfläche der Sechskantmutter (12) und der an den Durchgang (49 anschließenden Stirnwand der Aufnahme angeordnet ist.

Die Erfindung unterscheidet sich insofern vom Stand der Technik, als der Markierkörper von der Formseite eingeschraubt und mühelos durch Drehen über den gesamten Umfang eingestellt werden kann. Das Lösen des Markierkörpers erfolgt durch Drehen in entgegengesetzter Drehrichtung. Der Reibungsdruck gegen Verstellung des Markierkörpers ist durch eine Druckfeder gegeben. Der Markierkörper erzeugt in Verbindung mit der Sechskantmutter beim Einschrauben auch die Federvorspannung. Ein Lösen und Austauschen des Markierkörpers ist jederzeit möglich.

Eine Behinderung des Einschraubens des Markierkörpers ist dadurch ausgeschlossen, daß die Sechskantmutter einen Kragen aufweist, der einen Innenraum umschließt. Somit tritt das Gewinde in dem Innenraum ein.

Eine sichere Spannung der Druckfeder beim Einschrauben des Markierkörpers wird dadurch sichergestellt, daß die Länge des gewindefreien Schattes in entspanntem Zustand der Druckfeder kleiner als der Abstand zwischen der Stirnfläche des Innenbundes bis zur Austrittsfläche des Innengewindes ist. Beim Einschrauben in das Innengewinde wird die Sechskantmutter in axialer Richtung angezogen, so daß die Druckfeder gespannt wird.

Ein Ausführungsbeispiel der Erfindung wird anhand der Zeichnung erläutert, in der darstellen:
- Fig. 1: den Markiereinsatz im Schnitt mit herausgenommenem Markierkörper,
- Fig. 2: einen Schnitt nach der Linie II-II in Fig. 1,
- Fig. 3: den zusammengesetzten Markiereinsatz im Schnitt und
- Fig. 4: eine Draufsicht auf Fig. 3.

Der Markiereinsatz umfaßt eine zylindrische Hülse 1 mit einem kreisförmigen Außenquerschnitt. Diese Hülse wird in eine zylindrische Aufnahme einer Werkzeugplatte beziehungsweise Formplatte eingesetzt. Die Aufnahme kann kammerartig oder als Durchgang ausgebildet sein. Der Außenquerschnitt der Hülse und der Querschnitt der Aufnahme können auch eine andere Form als Kreisform haben.

Der Innenraum beziehungsweise die Aufnahme der Hülse 1 umfaßt ausgehend von der Formseite eine Ringwand 2, einen Innenbund 3, einen Durchgang 4 mit kleinerem Durchmesser, eine Ringkammer 5, eine Sechskantkammer 7 und eine Endstufe 8, die durch ein Verschlußelement 9 abgeschlossen ist. Das Verschlußelement 9 ist verschraubt, verpreßt oder verklemmt. Die Außenfläche der Hülse 1 hat fußseitig einen konischen Abschluß 10. Das Verschlußelement 9 wird nach dem Zusammenbau des Markiereinsatzes eingesetzt und verschlossen.

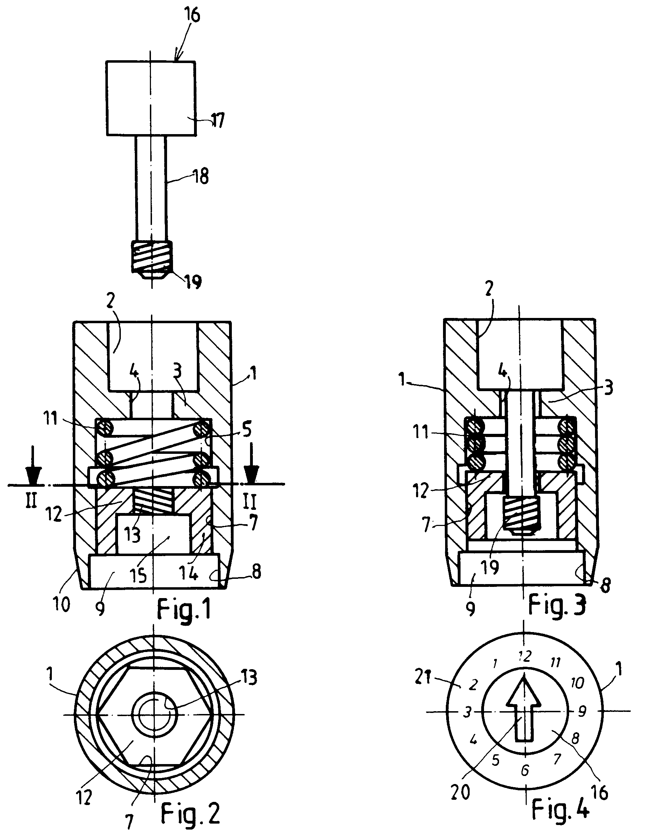

Die Ringkammer 5 nimmt eine Schraubendruckfeder 11 auf. Innerhalb der Sechskantkammer 7 befindet sich eine Sechskantmutter 12 mit einem Innengewinde 13 und einem Kragen 14, so daß ein Innenraum 15 freibleibt. Die Sechskantmutter 12 ist innerhalb der Sechskantkammer 7 in Axialrichtung verschiebbar, jedoch in Umfangsrichtung undrehbar. Die Schraubendruckfeder 11 ist im Grundzustand nach Fig. 1 im wesentlichen entspannt.

Ein Markierkörper 16 umfaßt einen zylindrischen Kopf 17 und einen Schaft 18, der ein Fußgewinde 19 trägt, dessen Durchmesser größer als der Durchmesser des Schaftes 18 ist. Das Gewinde 19 paßt ungehindert durch den Durchgang 4. Die Länge des gewindefreien Schaftes 18 in entspanntem Zustand der Druckfeder ist kleiner als der Abstand zwischen der Stirnfläche des Innenbundes 3 bis zur Austrittsfläche des Innengewindes 13. Dadurch stellt man sicher, daß der Markierkörper 16 in eingschraubtem Zustand nach Fig. 3 die Sechskantmutter 12 anhebt und die Druckfeder 11 spannt.

Der Markierkörper 16 hat in der Kopffläche nach Fig. 4 einen Schlitz 20 für ein klingenförmiges Werkzeug wie einen Schraubendreher. Der Schlitz 20 kann als Markierungspfeil ausgebildet sein. Die Stirnfläche 21 der Hülse 1 weist Symbole, Zahlmarkierungen oder andere Markierungen auf. Man kein Jahre, Monate, Tage, Arbeitsschichten, Kenngrößen, Werkstoffkennzeichnungen oder dergleichen angeben.

Der Markierkörper 16 wird in axialer Richtung und in Einschraubdrehrichtung in die Hülse eingeführt. Die Druckfeder 11 ist im wesentlichen entspannt. Die Sechskantmutter 12 steht auf dem Verschlußelement 9 auf. Beim Einführen kommt das Gewinde 19 mit dem Innengewinde 13 der Sechskantmutter 12 in Eingriff. Bei weiterem Eindrehen wird die Sechskantmutter 12 gegen die Wirkung der Schraubendruckfeder 11 angezogen und spannt dieselbe. Schließlich tritt das Gewinde 19 durch das Innengewinde 13 hindurch, vergleiche Fig. 3. Da der Schaft 18 einen kleineren Durchmesser als das Innengewinde 13 hat, ist der Markierkörper 16 in dieser Stellung in Einschraubdrehrichtung drehbar. Der Markierkörper 16 ist durch die Schraubendruckfeder 11 über die Sechskantmutter 12 gespannt, so daß eine Drehung zwar mittels eines Klingenwerkzeugs ohne weiteres möglich ist, jedoch ist eine ungewollte Verstellung ausgeschlossen.

Bei Drehung entgegen der Einschraubdrehrichtung tritt das Gewinde 19 wieder in das Innengewinde 13 ein. Die Druckfeder 11 entspannt sich. Der Markierkörper 16 läßt sich herausschrauben und austauschen.

## Patentansprüche

1. Markiereinsatz für ein Spritzgießwerkzeug mit einer eine zylindrische Aufnahme aufweisenden Hülse (1) und mit einem in der Aufnahme drehbar gehaltenen und in axialer Richtung vorgespannten Markierkörper (16), wobei die Aufnahme einen Innenbund (3) für den Kopf (17) des Markierkörpers (16) und einen daran anschließenden Durchgang (4) für den Schaft (18) des Markierkörpers (16) aufweist, dadurch gekennzeichnet, daß eine fußseitige Seckskantkammer (7) für eine Sechskantmutter (12) vorgesehen ist, daß der Schaft (18) des Markierkörpers (16) ein Fußgewinde (19) mit größerem Durchmesser als der Schaft (18) trägt und daß eine Druckfeder (11) zwischen der dem Durchgang (4) gegenüberliegenden Stirnfläche der Sechskantmutter (12) und der an den Durchgang (4) anschließenden Stirnwand der Aufnahme angeordnet ist.

2. Markiereinsatz nach Anspruch 1, dadurch gekennzeichnet, daß die Sechskantmutter (12) einen Kragen (14) aufweist, der einen Innenraum (15) umschließt.

3. Markiereinsatz nach Anspruch 2, dadurch gekennzeichnet, daß die Länge des gewindefreien Schaftes (18) in entspanntem Zustand der Druckfeder (11) kleiner als der Abstand zwischen der Stirnfläche des Innenbundes (3) bis zur Austrittsfläche des Innengewindes (13) der Sechskantmutter (12) ist.

## Claims

1. A marking insert for an injection moulding tool with a sleeve (1) having a cylindrical receiver and with a marking body (16) which is held rotatably in the receiver and is pre-tensioned in the axial direction, the receiver having an inner collar (3) for the head (17) of the marking body (16) and, adjoining the inner collar (3), a passage (4) for the shaft (18) of the marking body (16), characterized in that a hexagonal chamber (7) at the base side is provided for a hexagonal nut (12), in that the shaft (18) of the marking body (16) has a base thread (19) with a larger diameter than the shaft (18), and in that a pressure spring (11) is arranged between the end face of the hexagonal nut (12) facing the passage (4) and the end wall of the receiver adjoining the passage (4).

2. A marking insert according to Claim 1, characterized in that the hexagonal nut (12) has a projecting collar (14) which surrounds an inner space (15).

3. A marking insert according to Claim 2, characterized in that the length of the unthreaded shaft (18) is, in the relaxed state of the pressure spring (11), smaller than the spacing from the end face of the inner collar (3) to the outlet face of the inner thread (13) of the hexagonal nut (12).

## Revendications

1. Insert de marquage pour un outil de moulage par injection comportant une douille (1) présentant un logement cylindrique et un corps de marquage (16) maintenu dans le logement de manière à pouvoir tourner et précontraint en direction axiale, le logement présentant un collet interne (3) pour la tête (17) du corps de marquage (16) et un passage (4) subséquent pour la tige (18) du corps de marquage (16), caractérisé en ce qu'un compartiment hexagonal (7) du côté base est prévu pour un écrou hexagonal (12), en ce que la tige (18) du corps de marquage (16) porte un filet de base (19) qui présente un diamètre plus grand que la tige (18), et en ce qu'un ressort de pression (11) est agencé entre la surface frontale, faisant face au passage (4), de l'écrou hexagonal (12) et la paroi frontale du logement qui fait suite au passage (4).

2. Insert de marquage suivant la revendication 1, caractérisé en ce que l'écrou hexagonal (12) présente un col (14) qui entoure un espace interne (15).

3. Insert de marquage suivant la revendication 2, caractérisé en ce que la longueur de la tige sans filet (18) est, à l'état détendu du ressort de pression (11), plus petite que la distance entre la surface frontale du collet interne (3) et la surface de sortie du filet interne (13) de l'écrou hexagonal (12).
